# EUROPEAN PATENT APPLICATION

(11) **EP 2 524 939 A1**
(43) Date of publication of application: **21.11.2012**
(21) Application number: 11004060.7
(22) Date of filing: 17.05.2011
(51) Int. Cl.: C08J 3/20, C11D 3/37, C11D 3/07

(54) **Process for the preparation of flaked or pelletized or granulated soil release polymers**

(71) Applicant: Clariant S.A., Brazil, 04795-900 Sao Paulo SP (BR); Clariant International Ltd., 4132 Muttenz 1 (CH)
(72) Inventor: The designation of the inventor has not yet been filed
(74) Representative: Paczkowski, Marcus

(57) **Abstract**

A process for the preparation of flaked or pelletized or granulated non-ionic or anionic homo- or copolymers of polyethyleneterephthalate (PET) and/or polyoxyethyleneterephthalate (POET) comprises heating such polymer to melt it, mixing the molten polymer with a powdered organic or inorganic substrate, allowing the mixture to solidify whereby the polymer and the powdered organic or inorganic substrate stay in intimate contact and converting the solid formed by any suitable particle reducing process into flakes or pellets or granules. The products are in particular useful as soil release agents in laundry and fabric care products.

## Description

The instant invention relates to a process for the preparation of flaked, pelletized or finely granulated polyethylene-polyoxyethylene terephthalate (PET-POET) polymers, useful as soil release agents in laundry and fabric care products.

Laundry detergent compositions containing soil release polymers have been widely disclosed in the art. The term "soil release agent" is applied to materials that modify the fabric surface minimizing the subsequent soiling and making the cleaning of the fabric easier on further washing cycles. Polyesters of terephthalic and other aromatic dicarboxylic acids, more specifically polyethylene terephthalate - polyoxyethylene terephthalate (PET-POET) polymers, are known to have soil release properties. The use of PET-POET polymers as soil release agent was described in GB 1 467 098 and US 3,557,039.

PET-POET polymers are viscoelastic materials meaning that they exhibit both viscous and elastic characteristics when undergoing a deformation. While elastic materials strain instantaneously when submitted to a shear stress and quickly return to their original state once the stress is removed, viscous materials respond to the stress with a flow that persists as long as the stress is applied. When the stress is removed, viscous materials do not return to their original shape because the force has been used up in the fluid flow.

At temperatures above the melting point, the PET-POET polymer is a liquid with a measurable viscosity and normal stresses in simple shear flow indicate the viscoelasticity of the melt. When the temperature is reduced, the viscosity increases rapidly and the melt displays a pronounced elastic recovery from any deformation. Without to be bound to the theory, it is believed that the viscoelastic properties of PET-POET polymers described above are responsible for some of the difficulties in the processing of such polymers. During the processing of PET-POET polymers, even the increase of temperature due to the engine heat causes the polymer to become sticky, forming lumps of molten and un-molten polymer. This characteristic e.g. makes it difficult to obtain finely granulated PET-POET polymer.

It has now been found that it is possible to obtain a flaked or pelletized or finely granulated PET-POET polymer by melting the polymer, mixing the molten polymer with a powdered organic or inorganic substrate and cooling the mixture and thereby converting it into flakes or pellets or granules.

Preferably, during the mixing of the molten polymer with the powdered organic or inorganic substrate the formation of a homogeneous paste occurs which can be cooled and solidified and further processed by pelletization or granulation in an extruder.

Therefore, the invention pertains to a process for the preparation of a flaked or pelletized or finely granulated non-ionic or anionic homo- or copolymer of polyethyleneterephthalate (PET) and/or polyoxyethyleneterephthalate (POET) that comprises heating such polymer to melt it, mixing the molten polymer with a powdered organic or inorganic substrate, allowing the mixture to solidify whereby the polymer and the powdered organic or inorganic substrate stay in intimate contact and converting the solid by any suitable particle forming process into flakes or pellets or granules.

In the context of the present application the non-ionic or anionic homo- or copolymers of polyethyleneterephthalate (PET) and/or polyoxyethylene-terephthalate (POET) used in the process of the invention are shortly addressed as "PET-POET polymers".

The flaked or pelletized or granulated non-ionic or anionic PET-POET polymer prepared by the process of the instant invention may be incorporated into cleaning compositions such as powder detergents, fabric softeners, hard surface cleaners, pre-treatment products giving the compositions the soil release property and all the other effects expected from the polymers such as anti-redeposition and primary detergency.

The non-ionic or anionic PET-POET polymer is molten by raising the temperature above its melting point and preferably to a temperature in the range of 70 to 150 °C. The powdered organic or inorganic substrate is added under constant stirring and when a uniform melt is obtained, it is cooled and the solid formed is flaked or pelletized or granulated by any suitable means. The final product will be a flake, a pellet or a finely divided granulate.

The ratio between the powdered organic or inorganic substrate and the non-ionic or anionic PET-POET polymer preferably is from 1 : 99 to 99 : 1, more preferably from 20 : 80 to 80 : 20 and even more preferably from 40 : 60 to 60 : 40.

Suitable powdered organic or inorganic substrates comprise but are not limited to alkali metal or earth alkali metal carbonates, bicarbonates, borates, silicates, layered silicates, metal sulphates, metal phosphates, metal tripolyphosphates and citrates, zeolites, starch, sugar or mixtures of these. The property 'powdered' means that substrates have a mean particle size in the range of from 1 to 100 µm, preferably from 5 to 80 µm, determined by sieving analysis.

In a preferred embodiment of the invention the powdered organic or inorganic substrates are selected from the group consisting of sulphates and carbonates and more preferably from the group consisting of alkali metal sulphates, earth alkali metal sulphates, alkali metal carbonates and earth alkali metal carbonates. Among these substances the alkali metal sulphates and alkali metal carbonates are preferred and sodium sulphate and sodium carbonate are particularly preferred.

In a further preferred embodiment of the invention the non-ionic or anionic PET-POET polymers are water soluble or water dispersible and are selected from the anionic polyesters described in WO 2007/079850 and WO 2008/110318.

In a further particularly preferred embodiment of the invention the non-ionic or anionic PET-POET polymers have a structure according to the following formula (2) 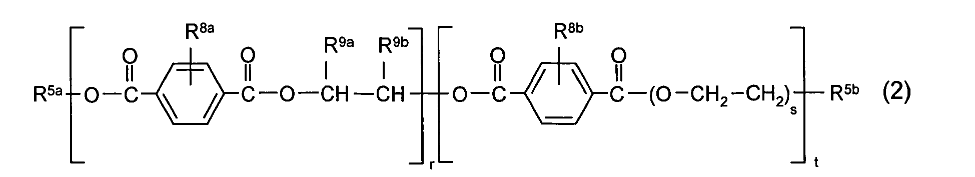 wherein
- R^{5a} and R^{5b}: independently from each other, are polyalkylene glycol monoalkylethers of formula (3) 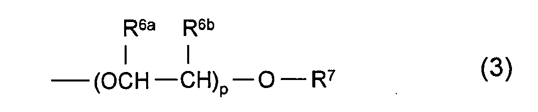
wherein
- R^{6a} and R^{6b}: independently from each other, are -H or C₁-C₁₈ n-alkyl or iso-alkyl and preferably any combination of -H and/or a -CH₃ group and more preferably both R^{6a} and R^{6b} are -H
- R⁷: is a linear or branched C₁-C₃₀ alkyl group or a linear or branched C₂-C₃₀ alkenyl group, a cycloalkyl group having 5 to 9 carbon atoms, a C₆-C₃₀ aryl group or a C₆-C₅₀ arylalkyl group and preferably a -CH₃ group
- p: is a number of from 1 to 200, preferably of from 1 to 50
- R^{8a} and R^{8b}: independently from each other, are -H or -SO₃Me, where Me is Li⁺, Na⁺, K⁺, Mg⁺⁺/2, Ca⁺⁺/2, Al⁺⁺⁺/3, NH₄⁺, a monoalkylammonium ion, dialkylammonium ion, trialkylammonium ion and/or tetraalkylammonium ion where the alkyl substituents of the ammonium ions are, independently of one another, (C₁-C₂₂)-alkyl radicals or (C₂-C₁₀)-hydroxy-alkyl radicals; and preferably R^{8a} and R^{8b} are -H
- R^{9a} and R^{9b}: independently from each other, are -H or C₁-C₁₈ n-alkyl or iso-alkyl and preferably any combination of -H and/or a -CH₃ group.
- s: is a number of from 1 to 200 and preferably of from 1 to 20 and
- r and t: independently from each other, are numbers of from 1 to 100 and preferably of from 1 to 50.

In the non-ionic or anionic PET-POET polymers according to formula (2) the groups indexed with "r" and "t" may have a statistical, random or block-wise distribution and preferably a random distribution.

In a further particularly preferred embodiment of the invention the non-ionic or anionic PET-POET polymers are selected from polymers obtainable by polycondensation of
a) aromatic dicarboxylic acids and/or their C₁-C₄ alkyl esters,
b) ethylene glycol,
c) optionally 1,2-propylene glycol,
d) optionally polyethylene glycol with an average molar mass [Mₙ] of from 200 to 8 000 g/mol,
e) optionally C₁-C₄ alkyl polyalkyleneglycol ethers with an average molar mass [Mₙ] of the polyalkyleneglycol ethers of from 200 to 5 000 and
f) optionally a polyfunctional compound;
wherein the molar ratio of the components b), c), d), e) and f), each relating to 1 mol of component a), is of from 0.1 to 4 mol for component b); of from 0 to 4 mol for component c); of from 0 to 0.5 mol for component d); of from 0 to 0.5 mol for component e) and of from 0 to 0.25 mol for component f). In the following these polymers are called polymers A.

In preferred polymers A the molar ratio of the components b), c), d), e) and f), each relating to 1 mol of component a), is of from 1.0 to 2.5 mol for component b); 0 mol for component c); of from 0 to 0.4 mol for component d); of from 0 to 0.25 mol for component e) and of from 0 to 0.2 mol for component f).

In more preferred polymers A the molar ratio of the components b), c), d), e) and f), each relating to 1 mol of component a), is of from 1.0 to 2.5 mol for component b); 0 mol for component c); of from 0.1 to 0.3 mol for component d); of from 0 to 0.2 mol for component e) and of from 0 to 0.1 mol for component f).

Preferably component a) used in the polycondensation to prepare the polymers A is terephthalic acid and/or terephthalic acid dimethyl ester.

Preferably the polyethylene glycol d) optionally used in the polycondensation to prepare the polymers A has an average molar mass [Mₙ] of from 2 000 to 7 000, more preferably of from 5 000 to 6 000 and even more preferably of 6 000.

Preferably the polymers A have a flow factor (ffc) of more than 8, more preferred of from 10 to 30.

Preferably the polymers A have a melting point of more than 40 °C, more preferably of more than 50 °C and even more preferably of more than 55 °C.

Preferably the polymers A have a molecular weight with a peak maximum Mp of from 4 000 to 15 000 g/mol.

For the purpose of better exemplification of the invention to the address of the skilled person, a figure of drawings is attached to the application which will be explained in more detail herein-below.

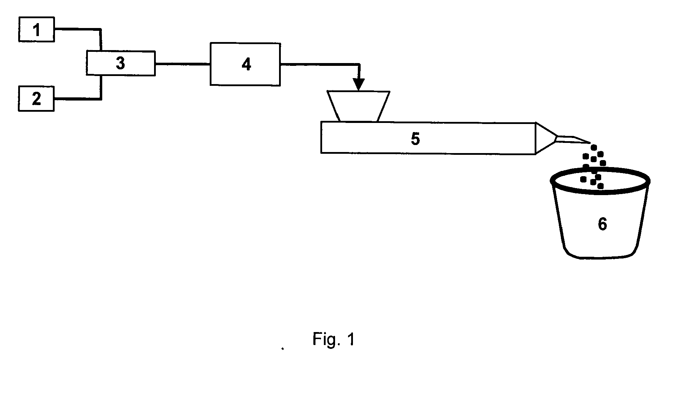

Fig. 1 shows an essentially schematic flow illustration of the process of the instant invention performed in several subsequent steps. This flow scheme is intended to illustrate the invention without limiting it thereto.

By means of reference numbers it is to see the supply of the non-ionic or anionic PET-POET polymers (1), which have to be provided as a melt, and the supply of the powdered organic or inorganic substrate (2). Both components proceed to the mixing section (3) where the intimate mixing takes place, to end up preferably in a homogenous paste. At the end of the mixing section (3) the created homogenous paste is fed to the cooling section (4) where the homogenous paste is allowed to solidify. From the cooling section (4), the solidified mixture proceeds to a suitable particle forming machine (5), whereby the drawing shows an extruder (5) for pelletization or granulation. From the particle forming machine (5) the flakes or pellets or granules are fed into a container (6) to be collected for storing and shipping which is not shown by the drawing.

## Claims

1. A process for the preparation of flaked or pelletized or granulated non-ionic or anionic homo- or copolymers of polyethyleneterephthalate (PET) and/or polyoxyethyleneterephthalate (POET) that comprises heating such polymer to melt it, mixing the molten polymer with a powdered organic or inorganic substrate, allowing the mixture to solidify whereby the polymer and the powdered organic or inorganic substrate stay in intimate contact and converting the solid by any suitable particle forming process into flakes or pellets or granules.

2. The process according to claim 1 wherein the molten polymer and the powdered organic or inorganic substrate are mixed until the formation of a homogeneous paste occurs which can be cooled and solidified in a subsequent step.

3. The process according to claim 1 or 2, wherein the powdered substrates comprise carbonates, bicarbonates or borates of alkali metals or earth alkali metals, silicates, layered silicates, metal sulphates, metal phosphates, metal tripolyphosphates and citrates, zeolites, starch, sugar or mixtures of these.

4. The process according to any of claims 1 to 3, wherein the ratio between the powdered substrate and the non-ionic or anionic PET-POET polymer is from 1 : 99 to 99 : 1, preferably from 20 : 80 to 80 : 20 and even more preferably from 40 : 60 to 60 : 40.

5. The process according to any of claims 1 to 4, wherein the non-ionic or anionic PET-POET polymer is molten by raising the temperature above its melting point and preferably to a temperature in the range of 70 to 150 °C.

6. Use of flaked or pelletized or granulated non-ionic or anionic homo- or copolymers of polyethyleneterephthalate (PET) and/or polyoxyethyleneterephthalate (POET) prepared according a process of any of claims 1 to 5 for the incorporation into cleaning compositions, such as powder detergents, fabric softeners, hard surface cleaners, or in pre-treatment products giving the compositions the soil release property and additional effects, such as anti-redeposition and primary detergency.
